Europäisches Patentamt

European Patent Office

Office européen des brevets

(19)

(11) EP 0 800 481 B1

(12) **EUROPÄISCHE PATENTSCHRIFT**

(45) Veröffentlichungstag und Bekanntmachung des Hinweises auf die Patenterteilung:
**12.08.1998 Patentblatt 1998/33**

(21) Anmeldenummer: **95942646.1**

(22) Anmeldetag: **27.12.1995**

(51) Int Cl.$^6$: **C02F 1/70**, C02F 1/32

(86) Internationale Anmeldenummer:
**PCT/DE95/01857**

(87) Internationale Veröffentlichungsnummer:
**WO 96/20136 (04.07.1996 Gazette 1996/30)**

(54) **VERFAHREN UND VORRICHTUNG ZUM REDUZIEREN DES NITRATGEHALTES VON WASSER**

PROCESS AND DEVICE FOR REDUCING THE NITRATE CONTENT OF WATER

PROCEDE ET DISPOSITIF POUR REDUIRE LA TENEUR EN NITRATE DE L'EAU

(84) Benannte Vertragsstaaten:
**AT BE CH DE DK ES FR GB IE IT LI NL SE**

(30) Priorität: **28.12.1994 DE 4447035**

(43) Veröffentlichungstag der Anmeldung:
**15.10.1997 Patentblatt 1997/42**

(73) Patentinhaber: **Egner, Andrea**
**74740 Adelsheim (DE)**

(72) Erfinder:
• **HAUG, Helmar**
**D-72406 Bisingen (DE)**
• **GOTTHOLD, Eva**
**D-72461 Albstadt (DE)**
• **JÄNICKE, Joffrey**
**D-72461 Albstadt (DE)**
• **JÄNICKE, René**
**D-72461 Albstadt (DE)**

• **HERTER, Nadine**
**D-72461 Albstadt (DE)**

(74) Vertreter: **Clemens, Gerhard, Dr.-Ing. et al**
**Patentanwaltskanzlei,**
**Müller, Clemens & Hach,**
**Lerchenstrasse 56**
**74074 Heilbronn (DE)**

(56) Entgegenhaltungen:
**WO-A-93/02965        WO-A-93/22249**
**DE-A- 3 924 349       DE-A- 4 025 078**
**DE-A- 4 317 939       GB-A- 2 271 106**
**US-A- 5 122 496**

• **NATURWISSENSCHAFTEN , Bd. 69, 1982, SPRINGER-VERLAG 1982, Seiten 444-445, XP002003360 KOTZIAS,D: "Photoreaktivität organischer Chemikalien in wässeringen Systemen in Gegenwart von Nitraten und Nitriten "**

**Beschreibung**

TECHNISCHES GEBIET

Die Erfindungbetrifft ein Verfahren zum Reduzieren des Nitratgehaltes von Wasser sowie eine Vorrichtung zur Durchführung desselben.

Die DE-A-42 12 604 offenbart ein Verfahren zur Aufbereitung von mit organischen Substanzen belastetem Rohtrinkwasser, das mit Pflanzenschutzmitteln belastet ist, wobei eine UV-Behandlung mit Licht erfolgt. Dabei ist das der Erfindung zugrundeliegende technische Problem, ein Verfahren bereitzustellen, das unter anderem darauf abzielt, eine nachträgliche oxidative Behandlung des aufzubereitenden Trinkwassers zu vermeiden.Dabei wird ultraviolettes Licht mit einer Wellenlänge von > 230 nm eingesetzt. Falls Licht auch mit Anteilen unter 230 nm verwendet wird, werden gleichzeitig Nitrit zerstörende Substanzen zugesetzt.

Das Verfahren zielt darauf ab, organische Verbindungen, insbesondere Pflanzenschutzmittel wie Atrazin, zu zerstören, ohne daß dabei das Nitrat zu Nitrit umgewandelt wird.

Die US-A-5 122 496 zeigt eine Vorrichtung, die Nitrat und/oder Nitrit verseuchtes Wasser behandelt. Dabei werden Katalysatoren eingesetzt, die bestimmte Porenradien aufweisen. Zum Abtöten von Mikroorganismen wird eine UV-Lampe eingesetzt.

Aufgrund verschärfter gesetzlicher Regelungen für die Qualität von Trinkwasser stellt sich für viele Wasserwerke das Problem, Restnitratmengen von 50 mg/l und mehr, wie sie in derzeit genutzten Quellen vorkommen, unter die gesetzlichen Richtwerte von 25 mg/l zu drücken, und dies zu wirtschaftlich vertretbaren Kosten und ohne Eintragen von in normalem Trinkwasser nicht sowieso vorhandenen Substanzen.

Zur Lösung dieses Problems wird durch die vorliegende Erfindung ein zweistufiges Verfahren vorgeschlagen: In einem ersten Schritt wird das zu behandelnde nitrathaltige Wasser in einer dünnen Schicht mit UV-Behandlungslicht bestrahlt, dessen Spektrum so gewählt ist, daß es von Nitrat absorbiert wird. Hierdurch erfolgt im wässrigen Milieu ein Reduktion des Nitrats zu Nitrit unter gleichzeitiger Sauerstofffreisetzung.

Gleichzeitig entspricht die Wellenlänge des im ersten Verfahrensschritt verwendeten UV-Lichtes einem Absorptionsmaximum von Nitrat-Ionen in wässrigem Milieu und zugleich einem Absorptionsminimum von Wasser, wobei die Wellenlänge des UV-Lichtes im Bereich zwischen 200 und 240 nm liegt und der pH-Wert im ersten Verfahrensschritt im Bereich zwischen 8 und 11 liegt.

in einem zweiten Verfahrensschritt wird dann das so erhaltene Nitrit unter Verwendung eines chemischen Reduktionsmittels vollends zu Stickstoff reduziert.

Für den chemischen zweiten Schritt können großtechnisch hergestellte preisgünstige und im Hinblick auf die Verwendung von Trinkwasser akzeptable Chemikalien eingesetzt werden, wie z.B. Amidoschwefelsäure. Auch durch den ersten Schritt erfolgt offensichtlich keinerlei Eintrag unerwünschter Chemikalien in das Wasser.

Auf diese Weise erhält man insgesamt eine effektive und preiswerte Reduzierung des Nitratgehaltes.

Vorteilhafte Weiterbildungen des erfindungsgemäßen Verfahrens sind in Unteransprüchen angegeben.

Für den photochemischen ersten Verfahrensschritt ist es vorteilhaft, wenn das mit dem Behandlungslicht zu behandelnde Wasservolumen die von der Behandlungslichtquelle abgegebenen Quanten möglichst vollständig ausnützt. Hierzu wird eine Vorrichtung zur Durchführung des Verfahrens vorgeschlagen, welche die im Anspruch 9 aufgeführten Merkmale umfaßt.

Vorteilhafte Weiterbildungen dieser Vorrichtung sind wiederum Gegenstand von Unteransprüchen.

Nachstehend wird die Erfindung anhand von Ausführungsbeispielen unter Bezugnahme auf die Zeichnung näher erläutert. In dieser zeigen:

Figur 1:    eine schematische Ansicht einer Anlage zur Reduzierung des Nitratgehaltes in Trinkwasser; und

Figuren 2 bis 5:    abgewandelte Ausführungsbeispiele von UV-Reduktionsreaktoren für die Behandlungsanlage nach Figur 1.

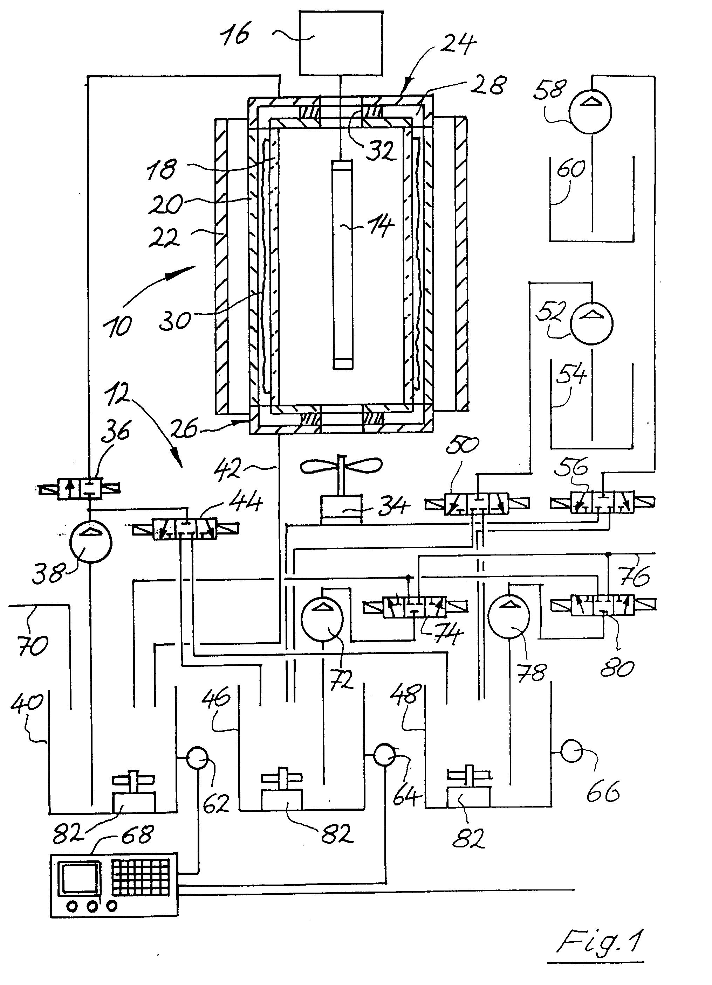

In Figur 1 ist schematisch eine Anlage zur Reduzierung des Nitratgehaltes von Trinkwasser wiedergegeben, die im oberen linken Teil der Figur einen insgesamt mit 10 bezeichneten UV-Reduktionsreaktor zeigt, während der untere und rechtsgelegene Figurenteil einen mit einem chemischen Reduktionsmittel arbeitenden Reduktionsreaktor 12 wiedergibt.

Der UV-Reduktionsreaktor 10 umfaßt eine stabförmige UV-Lampe 14, die von einem entsprechenden Netzgerät 16 her betrieben wird.

Die UV-Lampe 14 erzeugt UV-Licht mit Wellenlängen, welche von in wässrigem Milieu befindlichen Nitrat-Ionen absorbiert werden. Von den verschiedenen UV-Absorptionsbanden des Nitrat-Ions wird vorzugsweise eine solche gewählt, für welche die UV-Absorption verglichen mit der des Wassers groß ist.

Für Laborversuche wurde als UV-Lampe ein 125 W Quecksilberdampf-Hochdruckstrahler verwendet. Dieser erzeugt bei einer elektrischen Leistungsaufnahme von 125 W im UV C (248 - 280 mm) einen Quantenfluß von 8,9 W, im UV B einen Quantenfluß von 8,7 W und im UV A einen Quantenfluß von 7,8 W.

Die UV-Lampe 14 ist von einem Quarzzylinder 18 umgeben. Dieser ist seinerseits von einem zweiten Quarzzylinder 20 umgeben, auf dessen Außenseite sich ein Metallzylinder 22 befindet. Dessen Innenseite ist als Spiegelfläche ausgebildet.

Die beiden Quarzzylinder 18 und 20 sind durch Kopfteile 24, 26 verschlossen, die jeweils einen ringförmigen Verteilerraum 28 vorgeben, der mit einem der beiden Enden des durch die beiden Quarzzylinder begrenzten radial kleine Abmessung aufweisenden Ringraumes in Verbindung steht. In diesen Ringraum ist ferner ein zylindrisches Drahtnetz 30 eingesetzt, welches aus Kunststoff gefertigt ist. Das Drahtnetz ist so gewellt, daß es mit seinen Außenseiten in der Nähe der einander gegenüberliegenden Oberflächen der beiden Quarzzylinder 18, 20 liegt.

Die Kopfteile 24, 26 begrenzen jeweils einen mittigen Durchgang 32, so daß ein Ventilator 34 Kühlluft durch das Innere des Quarzzylinders 18 und über die UV-Lampe 14 blasen kann.

Das obere Kopfteil 24 ist über ein 2/2-Magnetventil 36 mit dem Ausgang einer Pumpe 38 verbunden, die aus einem Vorratsbehälter 40 ansaugt. Das Innere des unteren Kopfteiles 26 ist über eine Leitung 42 ebenfalls mit dem Vorratsbehälter 40 verbunden.

Im Vorratsbehälter 40 befindet sich Nitrat enthaltendes aufzubereitendes Wasser. Läuft die Pumpe 38 und ist das Magnetventil 36 in die Offenstellung bewegt, so wird von der Pumpe 38 Wasser aus dem Vorratsbehälter 40 durch den zwischen den beiden Quarzzylinders 18 und 20 bestehenden Ringraum bewegt, wobei die Drähte des Drahtnetzes 30 Schikanen darstellen, an denen sich Wirbel ausbilden, so daß das Wasser auf dem Weg durch den zwischen den Quarzzylindern liegenden Ringraum in radialer Richtung intensiv ausgetauscht wird.

Die von der UV-Lampe 14 abgegebenen UV-Lichtquanten werden von den im Wasser befindlichen Nitrationen absorbiert. Hierbei kommt es zunächst zu einer Primärreaktion.

$$NO_3^- \rightarrow NO_3 + e^- (aq) \qquad \text{(I)}$$

Anschließend an diese photochemisch herbeigeführte Reaktion kommt es zu einer Bildung von Nitrit, Sauerstoff und Singulettsauerstoff, sowie evtl. durch Nebenreaktionen zur Bildung von wenigen $H^+$-Ionen.

Insgesamt entspricht die Umwandlung von Nitrat in Nitrit der Reaktionsgleichung

$$2\ NO_3^- \rightleftharpoons 2\ NO_2^- + O_2 \qquad \text{(II).}$$

Aus der obigen Gleichung (II) ist ersichtlich, daß das Reaktionsgleichgewicht mit zunehmender Nitrit-Konzentration und Sauerstoffkonzentration in Richtung Nitrat verschoben wird.

Eine Rückbildung von Nitrat erhält man auch durch Disproportionierung nach der Gleichung

$$3\ HNO_2 \rightarrow 2\ NO + HNO_3 + H_2O \qquad \text{(III),}$$

wobei festgestellt wurde, daß die photochemisch herbeigeführte Nitritbildung bei einem pH-Wert von etwa 6 aufhört.

Aus den obigen Darlegungen ist ersichtlich, daß die photochemische Reduktion von Nitrat zu Nitrit insgesamt begünstigt wird, wenn man das entstehende Nitrit dem Wasser entzieht und für einen pH-Wert von über 6 sorgt, vorzugsweise einen pH-Wert im Bereich von 9 bis 11 einstellt.

Zur Einstellung der o.g. bevorzugten Bedingungen für den photochemischen ersten Verfahrensschritt der Reduktion von Nitrat zu Stickstoff und zur chemischen Rest-Reduktion des Nitrits dient der im unteren und rechten Teil von Figur 1 gezeigte chemische Reduktionsreaktor.

Über ein 3/3-Magnetventil 44 kann die Leitung 42 wahlweise mit einem von zwei Reaktionsbehältern 46, 48 verbunden werden. In die Reaktionsbehälter 46, 48 kann über ein weiteres 3/3-Magnetventil 50 durch eine Dosierpumpe 52 aus einem Vorratsbehälter 54 eine Amidoschwefelsäure-Lösung (pH 3) in den jeweils ausgewählten der Reaktionsbehälter 46, 48 gepumpt werden, so daß dort das Nitrit nach folgender Gleichung reduziert wird:

$$NO_2^-(aq) + NH_2SO_3^-(aq) + H^+(aq)$$

$$\rightarrow N_2(g) + H^+(aq) + SO_4^{--}(aq) + H_2O(l) \qquad \text{(IV)}$$

Anschließend kann über ein weiteres 3/3-Magnetventil 56 über eine weitere Dosierpumpe 58 NaOH-Lauge aus einem Vorratsbehälter 60 in den jeweils angewählten der Reaktionsbehälter 46, 48 gefördert werden, um den pH-Wert wieder auf einen Wert zwischen 9 und 11 einzustellen.

Als einfache Sensoren, die den jeweiligen Ist-Zustand der in den Behältern 40, 46 und 48 befindlichen Flüssigkeitsvolumina überwachen, finden pH-Fühler 62, 64, 66 Verwendung. Deren Ausgangssignale sind mit drei Eingängen einer Steuereinheit 68 verbunden.

Die Behälter 40, 46 und 48 haben beim hier betrachteten Ausführungsbeispiel alle gleiche Größe, und es wird der Übersichtlichkeit halber und zur besseren Erläuterung angenommen, daß zwischen diesen Behältern jeweils die ganzen Flüssigkeitsvolumina ausgetauscht werden. In der Praxis können aber auch Behälter unterschiedlicher Größe verwendet werden und der Austausch von Flüssigkeitsmengen kann auf solche Mengen beschränkt sein, wie sie zum Wiederherstellen von ausreichenden Bedingungen für den ersten Verfahrensschritt der UV-induzierten Reduktion von Nitrat zu Nitrit bzw. zur Rest-Reduktion von Nitrit notwendig sind.

Das Zuführen von zu reinigendem, nitrathaltigem Wasser zum Vorratsbehälter 40 erfolgt über eine Leitung 70, die von einer herkömmlichen mechanisch/chemischen Vorreinigung herkommt.

Dem Reaktionsbehälter 46 ist eine Pumpe 72 zugeordnet, die in diesem Behälter befindliches Wasser über ein 3/3-Magnetventil 74 entweder zurück in den Vorratsbehälter 40 oder in eine Reinwasser-Abgabeleitung 76 drücken kann. Ähnlich kann im Vorratsbehälter 48 befindliches Wasser durch eine Pumpe 78 über ein 3/3-Magnetventil 80 entweder in den Vorratsbehälter 40 oder in die Abgabeleitung 76 gefördert werden.

Den Behältern 40, 46 und 48 zugeordnete Rühreinheiten 82 sorgen für eine Durchmischung der in den Behältern befindlichen Wassermengen.

Die oben beschriebene Trinkwasser-Aufbereitungsanlage arbeitet grob gesprochen wie folgt:

Über die Leitung 70 zugeführtes Wasser wird zunächst von der Pumpe 38 bei durch die Steuereinheit 68 geöffnetem Magnetventil 36 durch den zwischen den Quarzzylindern 18 befindlichen Ringraum umgewälzt, wobei dort im Wasser laufend Turbulenzen durch das Drahtnetz 30 erzeugt werden, so daß immer neu Teilvolumina mit der Außenseite des Quarzzylinders 18 in Kontakt treten. Durch das von der UV-Lampe 14 ausgesandte UV-Licht wird Nitrat gemäß der obigen Gleichung (I) zu Nitrit reduziert.

Hat der Nitritgehalt im im Kreislauf umgesetzten Wasser so stark zugenommen, daß die Rückreaktion zu Nitrat in nennenswertem Maße einsetzt, was über den pH-Fühler 62 festgestellt werden kann, so schließt die Steuereinheit 68 das Magnetventil 36 und öffnet das Magnetventil 44 zu demjenigen der insgesamt im Gegentakt betriebenen Reaktionsbehälter 46, 48, der gerade leer ist. Im angewählten Reaktionsbehälter wird dann durch Einstellen einer der beiden Arbeitsstellungen des Magnetventiles 50 saure Amidoschwefelsäure-Lösung (pH 3) dem entsprechenden der Reaktionsbehälter 46, 48 zugeführt, bis entweder der Nitrit-Gehalt soweit reduziert ist, daß der Verfahrensschritt der photoinduzierten Nitrat-Reduktion wiederholt werden kann, oder aber der Nitrit-Gehalt unter dem gemäß der gesetzten Norm zulässigen Nitrat-Gehalt liegt, so daß nach Abgabe des Wassers aus dem entsprechenden Reaktionsbehälter auch nach anschließender Aufoxidierung des Rest-Nitrites kein unzulässig hoher Nitratgehalt im abgegebenen Wasser erhalten wird.

In Abwandlung von Figur 1 kann man auch das Magnetventil 44 mit einer dritten Arbeitsstellung ausbilden und die Abgabeleitung 76 über die Pumpe 38 beaufschlagen, wenn die Nitrat-Konzentration im Vorratsbehälter 40 einen vorgegebenen Grenzwert unterschreitet.

Aus der oben gegebenen Beschreibung ist ersichtlich, daß nach dem erfindungsgemäßen Verfahren gereinigtes Wasser zusätzlich zu innerhalb der gesetzlichen Normen liegendem Rest-Nitratgehalt und sonstigen schon im über die Leitung 70 zugeführten Wasser enthaltenen zulässigen Bestandteilen nur noch zusätzliche Natriumionen und Sulfationen enthält. Diese Ionen sind aus Gesundheitsgründen unbedenklich.

Bei den abgewandelten UV-Reduktionsreaktoren nach den Figuren 2 bis 5 sind Reaktorkomponenten, die von der Funktion her schon unter Bezugnahme auf Figur 1 erläuterten Komponenten entsprechen, wieder mit denselben Bezugszeichen versehen. Diese Komponenten werden nachstehend nicht nochmals im einzelnen beschrieben.

Bei dem UV-Reduktionsreaktor nach Figur 2 ist die UV-Lampe 14 unter Verwendung von Stirnscheiben 84 flüssigkeitsdicht in den Quarzzylinder 18 eingeschlossen, durch den über Leitungen 86, 88 ein Luftstrom umgewälzt wird.

Koaxial zum Quarzzylinder 18 ist ein Sprühdüsenring 90 vorgesehen, dessen Innenraum über eine Leitung 92 mit dem Ausgang der Pumpe 38 verbunden ist. Der Sprühdüsenring 90 erzeugt Wassertröpfchen mit kleinem Durchmesser, in der Praxis z.B. 0,5 bis 1 mm. Diese bewegen sich in dem Ringraum, der durch den Quarzzylinder 18 und den Metallzylinder 22 begrenzt ist, unter Schwerkraft nach unten, wobei sie dem Licht der UV-Lampe 14 ausgesetzt sind. Über eine weitere Leitung 94 wird der Innenraum des UV-Reduktionsreaktors 10 mit unter geringfügig über Atmosphärendruck stehendem Stickstoff beaufschlagt, um Luftsauerstoff von dem zylindrischen Tröpfchen-Vorhang fernzuhalten.

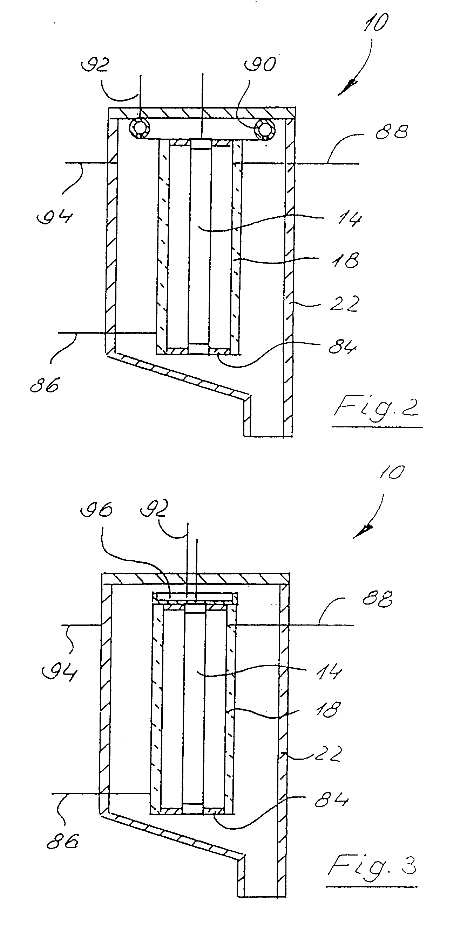

Beim Ausführungsbeispiel nach Figur 3 wird auf der Außenseite des Quarzzylinders 18 ein dünner herablaufender Wasserfilm dadurch erzeugt, daß man das über die Leitung 92 zugeführte Wasser in eine Verteilerschale 96 gibt, über deren Rand es dann in Umfangsrichtung gleich verteilt abläuft.

Beim Ausführungsbeispiel nach Figur 4 ist in dem Ringraum zwischen dem Quarzzylinder 18 und dem Metallzylinder 22 ein zylindrisches Drahtnetz 98 aus Kunststoff vorgesehen, welches als lichtdurchlässige Rieselfläche für einen Wasserfilm dient, der von einem Düsenring 100 in Zusammenarbeit mit dem Drahtnetz 98 erzeugt wird. Der Düsenring 100 gibt so große Wassertropfen ab, daß diese auf dem Drahtnetz 98 zusammenwachsen und so einen geschlossen absinkenden Wasserfilm bilden.

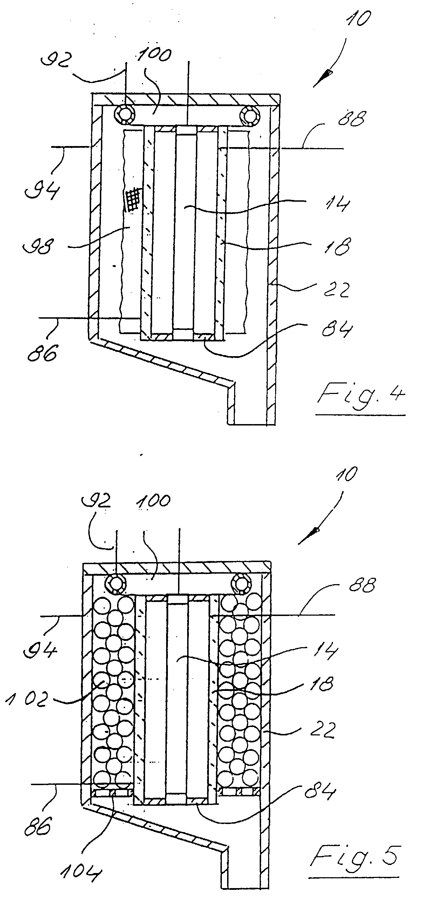

Beim Ausführungsbeispiel nach Figur 5 erhält man eine große Oberfläche aufweisende rieselnde Wasserschicht dadurch, daß man große vom Düsenring 100 abgegebene Wassertropfen über eine Schüttung 102 laufen läßt, die aus Quarzkugeln besteht. Die Schüttung 102 ist unten durch eine Lochscheibe 104 abgestützt.

Das Verfahren stellt sich mit erheblichen Vorteilen gegenüber anderen Verfahren dar. Hierbei wären beispielsweise zu nennen:

- Keine Nitrataufkonzentrierung wie bei der Umkehrosmose oder bei Ionenaustauschern, sondern eine Nitratvernichtung. Nachgewiesen wurden Nitratverminderungen von 145 mg/l auf 19 mg/l.
- Die günstigen Betriebskosten bei ca. 15 l/s im Vergleich zu anderen chemisch-physikalischen Verfahren.
- Die durch die Modularität sowie die günstige Kinetik bedingte geringe Bauraumgröße und die damit in Zusammenhang stehenden geringen Investitionskosten.
- Der kontinuierliche Durchfluß ohne Verzögerung und die wiederum damit in Zusammenhang stehenden geringen Investitionskosten.

Weitere Einzelheiten eines praktischen Ausführungsbeispieles für ein Labormodell einer erfindungsgemäßen Anlage zum Entfernen von Nitrat aus Trinkwasser ergeben sich aus der nachstehenden Versuchsbeschreibung.

Die Absorptionsspektren von Nitrat und Nitrit liegen in einem Wellenlängenbereich zwischen 200 und 240 nm. Daher wird das Trinkwasser mit einer UV-Lampe bestrahlt, deren UV-Strahlen Wellenlängen in diesem Bereich liegen.

Auf der einen Seite muß die Schichtdicke des dünnen Wasserfilms, der mit UV-Licht bestrahlt wird, so groß sein, daß der größte Teil der von der UV-Lampe ausgesandten Quanten durch die Nitratabsorption im Wasser bleibt. Auf der anderen Seite darf die Schichtdicke nicht zu groß werden, weil der größte Teil der Quanten an der Wasseroberfläche absorbiert wird. Beispiel: 90% Absorption ergibt eine Extinktion von E = 1. Nach dem Lambert-Beer'schen Gesetz gilt dann für die Schichtdicke:

$$d = \frac{E}{\varepsilon \cdot c}$$

mit

E = 1
c = $10^{-3}$ mol/l (Anfangskonzentration)
ε = $10^5$ l/mol (molekulare Absorptionskonstante für Wellenlängen 200 - 240 nm)

ergibt dies

d = 1 mm,

wobei

$\frac{I}{I_o}$ = $10^{-\varepsilon \cdot c \cdot d}$ (Lambert-Beer Gesetz)
I = Intensität.

Eine günstige Filmdicke sollte somit im Bereich von ca. 1 mm liegen.

Zur exakten Definition der Versuchsbedingungen ist die Anregungswahrscheinlichkeit nach folgender Formel zu berechnen:

W = $1 - 10^{-\varepsilon \cdot \varphi \cdot t/A}$
φ = Molquantenfluß in mol/s

t = Belichtungszeit in s

ε = Materialkonstante in $dm^2$/mol

A = Fläche in $dm^2$

und

$$\varphi = \frac{I_L \cdot \lambda}{h \cdot c \cdot N_L}$$

mit

h = 6,625 . $10^{-34}$ J . s

c = 2,9979 . $10^{17}$ nm/s

$N_L$ = 1 mol $\stackrel{\wedge}{=}$ 6 . $10^{23}$ Teilchen

λ = Wellenlänge in nm

$I_L$ = Lampenleistung in Abhängigkeit der Wellenlänge.

Die Anregungswahrscheinlichkeit bei den Wellenlängen, die im Hauptabsorptionsbereich von Nitrat liegen, können so problemlos für eine Lampe berechnet werden. Es können Anregungswahrscheinlichkeiten für Wellenlängen von 200 bis 225 nm von 80 bis 90 % erzielt werden.

Beim Bau der Apparatur ist auf mehrere Forderungen zu achten: Dünner Wasserfilm um die Lampe und trotzdem große Volumengeschwindigkeit.

Zwischen Wasserfilm und Lampe darf nur Luft sein.

Verwendung von Wellenlängen zwischen 200 und 240 nm (Nanometer) (hohes W in der Formel durch eine sehr preisgünstige und zugleich ungefährliche UV-Lampe HOK 4/120/SE von der Firma Philips. Durch Wellenlängen zwischen 200 und 240 nm bildet sich Ozon, welches abgeführt und absorbiert werden muß. Mit einer N2-Begasung (Stickstoff) soll eine näherungsweise sauerstoffreie Atmosphäre geschaffen werden können. Mit der Zirkulation erhöht sich in dem den Umsatz beeinflussenden Produkt aus Quantenfluß und Belichtungszeit die Belichtungszeit, um den relativ kleinen Quantenfluß pro Fläche der Modell-Lampe wieder auszugleichen.

Genaue Messungen wurden mit einem Ionenchromatographen durchgeführt. Der Ionenchromatograph hat die Anionentrennsäule Dionex AS4A und arbeitet mit dem Fließmittel Na2CO3/NaHCO3. Die Standardabweichung beträgt aufgrund von fünf Messungen bei einem Standard < 1%. Der Korrelationskoeffizient der Kalibriergeraden beträgt γ= 0,999. Bei dieser Gelegenheit wird noch die Möglichkeit genutzt, Kationenveränderungen, insbesondere die von Na+, mit einem Atomabsorptionsspektrographen (AAS) zu erfassen. Eine weitere Meßgröße war der pH-Wert. Das Gerät mit der Genauigkeit +- 0.1 wurde vor den Messungen kalibriert. Schließlich wurden noch photometrisch die Ozon-Konzentrationen im behandelten Wasser gemessen.

Aus den Versuchen ergeben sich folgende Erkenntnisse: Der Nitratabbau wird bei pH 10 und Wellenlängen von < 248 nm im Gegensatz zu Wellenlängen von > 248 nm nicht mehr auf 25% beschränkt.

Bei einer höheren Anfangskonzentration fällt Nitrat zuerst lawinenartig ab, von 30 mg/l ab dann wieder so, als ob man nur 30 mg/l eingesetzt hätte.

Bei einer Anfangskonzentration von 145 mg/l kann ein bis zu 87%iger Umsatz eintreten.

Modellanlage: Mit 5 min Betriebsdauer (50 Durchläufe) :

$$126 \frac{mg}{5 \, min \, . \, l} = 25,2 \frac{mg}{l \, . \, min}$$

Optimierte Anlage: Mit 6 s Betriebsdauer (1 Durchlauf) :

$$126 \frac{mg}{l \, . \, 6s} = 21 \frac{mg}{l \, . \, s}$$

Da die Quantenausbeute knapp unter 1 liegt, kann in der Modellanlage nach 5 min eine Anregungswahrscheinlichkeit von 80 - 90 % angenommen werden.

Das erfindungsgemäße Verfahren kann zu einer Nitratreduzierung im Trinkwasser auf einem neuen Weg unter Einsparung von Zeit genutzt werden. Ein schneller Nitratabbau, besonders im hohen Konzentrationsbereich (pH-Wert 10) ist möglich.

Würde der UV-Reaktor etwas verlängert und die Lampe UVH 10220 von der Fa. UV-Technik eingebaut, könnte bei 1 kW Eingangsleistung ein ca. 40facher Quantenfluß erzeugt werden. Dann könnte die Belichtungszeit auf einen einzigen Durchlauf reduziert werden. Mit $I_L$ = 8W, der Bestrahlungsfläche A = 3 $dm^2$ und der Belichtungszeit für einen Durchlauf bei 30 l/min t = 0,24 s wird ebenfalls eine Anregungswahrscheinlichkeit von 80 - 90 % erreicht.

Nun ist aber zu bedenken, daß durch den starken KW-Strahler auch mehr Ozon eingetragen wird. Durch eine N2-Begasung kann aber Ozon vom Wasserfilm ferngehalten werden.

Das erfinderische Verfahren kann zu einer Nitratreduzierung im Trinkwasser auf einem neuen Weg genutzt werden, der bezüglich der Steuerung sowie des Energie- und Chemikalienaufwands günstig ist. Das gilt besonders im Vergleich zu dem bekannten Elektrolyseverfahren, das bezüglich der Modularität und Bauraumgröße zu dem vorliegenden Verfahren die einzige Alternative darstellt.

Durch eine Anregungswahrscheinlichkeit von 80 - 90 %, Wellenlängen zwischen 200 und 240 nm, pH 10 und einer Strömungsgeschwindigkeit von ca. 0,5 m/s am definierten Drahtnetz kann ein 80 - 90%iger Abbau von 145 mg/l aus erreicht werden. Wesentlich für diesen Erfolg und Wirkungsgrad ist die Kombination Wellenlängen (spektrale Verteilung definiert), pH-Wert, Anregungswahrscheinlichkeit und Strömungsgeschwindigkeit.

In der Modellapparatur fließt ein dünner Wasserfilm an der Lampe so vorbei, daß dazwischen kein Quarzglas ist. Für eine großtechnische Apparatur wird vorgeschlagen, als Wasserleiteinrichtung eine schiefe Ebene vorzusehen, über die die UV-Strahler mit Reflektoren angebracht werden.

Eine Alternative wäre die Erzeugung eines Wasserfilms wie in der beschriebenen Modellapparatur durch eng aneinanderliegende Düsen an einem Ring, so daß ein zylindrischer Tröpfchen-vorhang entsteht. Dadurch können die Schwankungen relativ klein gehalten werden. Damit die Verdunstung nicht zu groß wird, sollte das Temperaturgefälle im Raum klein bleiben. Trübungen stören wenig: Die Ergebnisse der Versuche kamen trotz einer schwachen Trübung bei pH 10 zustande. Wie schon erwähnt, findet die photochemische Reaktion an der Oberfläche statt. Geringe Turbulenzänderungen und Filmdickeänderungen haben keinen Einfluß. Trotz der Verdoppelung der Zirkulationsgeschwindigkeit von 7,5 l/min auf 15 l/min änderte sich am Umsatz nichts. Da die Ozonkonzentration < 0,05 mg/l im Wasser beträgt, kann die Bildung toxischer Abbauprodukte aus halogenierten organischen Verbindungen ausgeschlossen werden.

**Patentansprüche**

1.  Verfahren zum Reduzieren des Nitratgehaltes von Wasser
    **dadurch gekennzeichnet,** daß

    -   das Nitrat im zu reinigenden Wasser in einem ersten Verfahrensschritt unter Bestrahlung einer dünnen Schicht des zu behandelnden Wassers mit UV-Licht zu Nitrit reduziert wird und
    -   das so erhaltene Nitrit in einem zweiten Verfahrensschritt unter Verwendung eines chemischen Reduktionsmittels in dem wässrigen Milieu zu Stickstoff reduziert wird,
    -   wobei die Wellenlänge des im ersten Verfahrensschritt verwendeten UV-Lichtes einem Absorptionsmaximum von Nitrat-Ionen im wässrigen Milieu und zugleich einem Absorptionsminimum von Wasser entspricht,
    -   die Wellenlänge des UV-Lichtes im Bereich zwischen 200 und 240 nm (Nanometer) liegt und
    -   der pH-Wert im ersten Verfahrensschritt im Bereich zwischen 8 und 11, insbesondere bei etwa 9 bis 10 gehalten wird.

2.  Verfahren nach Anspruch 1,
    **dadurch gekennzeichnet,** daß
    das Reduktionsmittel eine Amidoverbindung, insbesondere Amidoschwefelsäure umfaßt.

3.  Verfahren nach einem der Ansprüche 1 bis 2,
    **dadurch gekennzeichnet,** daß
    im ersten Behandlungsschritt das Wasser in einem für das UV-Licht durchlässigen Rohr geführt wird und die Strömungsgeschwindigkeit des Wassers in diesem Rohr auf einem Wert gehalten wird, bei welchem in der Nachbarschaft der Wand des Rohres Turbulenzen erzeugt werden.

4.  Verfahren nach Anspruch 3,
    **dadurch gekennzeichnet,** daß
    die Strömungsgeschwindigkeit des Wassers etwa 0,5 m/s bis 2,5 m/s beträgt.

5.  Verfahren nach einem der Ansprüche 1 bis 3,
    **dadurch gekennzeichnet,** daß
    über die gesamte Dauer des ersten Verfahrensschrittes der pH-Wert des Wassers auf mehr als 6 gehalten wird, vorzugsweise durch Zugabe von NaOH.

**6.** Verfahren nach einem der Ansprüche 1 bis 5,
**dadurch gekennzeichnet,** daß
das Wasser im ersten Verfahrensschritt mehrmals durch eine mit UV-Licht beaufschlagte Region geleitet wird.

**7.** Verfahren nach einem der Ansprüche 1 bis 5,
**dadurch gekennzeichnet,** daß
der erste und zweite Verfahrensschritt in einem Durchlaufverfahren angewendet werden.

**8.** Verfahren nach einem der Ansprüche 1 bis 7,
**dadurch gekennzeichnet,** daß
die Temperatur des Wassers unter 25°C (Grad Celsius) gehalten wird.

**9.** Vorrichtung zur Durchführung des Verfahrens nach einem der Ansprüche 1 bis 8,
**dadurch gekennzeichnet,** daß

- sie einen UV-Reduktionsreaktor (10) und einen mit diesem verbindbaren chemischen Reduktionsreaktor (12) aufweist, wobei der UV-Reduktionsreaktor (10) umfaßt:
- eine UV-Lichtquelle (14), eine die UV-Lampe (14) zumindest teilweise umgebende für UV-Licht durchlässige oder solches reflektierende Leiteinrichtung (18, 20; 18; 98; 102) für das zu bestrahlende Wasser, wobei die Leiteinrichtung einen dünnen Wasserfilm erzeugt,
- eine Pumpe (38) zum Fördern des zu behandelnden Wassers über die Leiteinrichtung, sowie vorzugsweise einen die Leiteinrichtung umgebenden Spiegel (22), wobei
- der UV-Reduktionsreaktor (10) über ein Umschaltventil (44) mit mindestens einem Reaktionsbehälter (46, 48) des chemischen Reduktionsreaktors (12) verbindbar ist, welcher mit einer Zugabeeinrichtung (52, 54) für das Reduktionsmittel und/oder einer Zugabeeinrichtung (58, 60) für Lauge zusammenarbeitet,
- wobei eine Programmsteuerung (68) für das Umschaltventil (44), die zeitabhängig und/oder in Abhängigkeit vom pH-Wert des im UV-Reduktionsreaktors (10) umgewälzten Wassers arbeitet.

**10.** Vorrichtung nach Anspruch 9,
**dadurch gekennzeichnet,** daß
die Leiteinrichtung zwei unter kleinem Abstand angeordnete, für das UV-Licht durchlässige Leitwände (18, 20) aufweist.

**11.** Vorrichtung nach Anspruch 10,
**dadurch gekennzeichnet,** daß
die Leiteinrichtung zwei unter kleinem radialen Abstand koaxial zur UV-Lichtquelle (14) angeordnete zylindrische Leitrohre (18, 20) aufweist.

**12.** Vorrichtung nach Anspruch 11,
**dadurch gekennzeichnet,** daß
die UV-Lichtquelle (14) stabförmig ist und auf der Achse der Leitrohre (18, 20) angeordnet ist.

**13.** Vorrichtung nach Anspruch 11 oder 12,
**dadurch gekennzeichnet,** daß
der Spiegel eine auf die Außenseite des äußeren Leitrohres (20) aufgebrachte Spiegelschicht ist.

**14.** Vorrichtung nach Anspruch 9,
**dadurch gekennzeichnet,** daß
die Leiteinrichtung einen zur Achse der UV-Lichtquelle (14) koaxialen Sprühdüsenkranz (90) aufweist.

**15.** Vorrichtung nach Anspruch 9,
**dadurch gekennzeichnet,** daß
die Leiteinrichtung einen zur Achse der UV-Lichtquelle (14) koaxialen Tropfen-Düsenring (100) aufweist, welcher einen zur Achse der UV-Lichtquelle (14) im wesentlichen koaxialen zylindrischen Wasserschleier erzeugt.

**16.** Vorrichtung nach Anspruch 9,
**dadurch gekennzeichnet,** daß
die Leiteinrichtung eine zur UV-Lichtquelle (14) koaxiale Verteilerschale (96) aufweist, über deren Rand das dem Schaleninneren zugeführte Wasser in Umfangsrichtung gleichförmig verteilt abfließt, so daß man einen im wesentlichen zur Achse der UV-Lichtquelle koaxialen zylindrischen Wasserschleier erhält.

**17.** Vorrichtung nach Anspruch 15 oder 16,
**gekennzeichnet durch**
einen zur Achse der UV-Lichtquelle (14) koaxialen zylindrischen Leitkörper (18; 98) für den Wasserschleier, der UV-Licht durchläßt oder reflektiert.

**18.** Vorrichtung nach Anspruch 17,
**dadurch gekennzeichnet,** daß
der Leitkörper ein Kunststoff-Drahtsieb (98) ist.

**19.** Vorrichtung nach Anspruch 17,
**dadurch gekennzeichnet,** daß
der Leitkörper durch eine zwischen koaxialen Wänden (18, 20) gehaltene, für das UV-Licht durchlässige Materialschüttung (102) gebildet ist.

**20.** Vorrichtung nach einem der Ansprüche 9 bis 19,
**dadurch gekennzeichnet,** daß
der Spiegel (22) für sichtbares Licht und/oder Wärmestrahlung durchlässig ist.

**21.** Vorrichtung nach einem der Ansprüche 9 bis 20,
**dadurch gekennzeichnet,** daß
der chemische Reduktionsreaktor (12) eine Austragpumpenanordnung (72, 78) aufweist, welche über eine Servoventilanordnung (74, 80) mit einer Frischwasser-Abgabeleitung (76) und/oder dem UV-Reduktionsreaktor (10) verbindbar ist.

**22.** Vorrichtung nach Anspruch 21,
**gekennzeichnet durch**
eine Programmsteuerung (68) für die Servoventilanordnung (74, 80), welche zeitabhängig oder in Abhängigkeit vom pH-Wert des im chemischen Reduktionsreaktor (12) befindlichen Wassers arbeitet.

## Claims

**1.** Process for reducing the nitrate content of water, characterized in that

- the nitrate in the water to be purified is reduced to nitrite in a first process step with irradiation of a thin layer of the water to be treated with UV light and
- the nitrite thus obtained is reduced to nitrogen in a second process step using a chemical reducing agent in the aqueous environment,
- the wavelength of the UV light used in the first process step corresponding to an absorption maximum of nitrate ions in the aqueous environment and, at the same time, to an absorption minimum of water,
- the wavelength of the UV light being in the range between 200 and 240 nm (nanometres) and
- the pH in the first process step being kept in the range between 8 and 11, in particular at about 9 to 10.

**2.** Process according to Claim 1, characterized in that the reducing agent comprises an amido compound, in particular amidosulphuric acid.

**3.** Process according to one of Claims 1 to 2, characterized in that, in the first treatment step, the water is conducted in a tube which is transparent to the UV light and the flow velocity of the water in this tube is kept at a value at which turbulence is generated in the vicinity of the tube wall.

**4.** Process according to Claim 3, characterized in that the flow velocity of the water is about 0.5 m/s to 2.5 m/s.

**5.** Process according to one of Claims 1 to 3, characterized in that, over the entire period of the first process step, the pH of the water is kept at above 6, preferably by adding NaOH.

6. Process according to one of Claims 1 to 5, characterized in that the water in the first process step is passed repeatedly through a region subjected to UV light.

7. Process according to one of Claims 1 to 5, characterized in that the first and second process steps are employed in a continuous flow process.

8. Process according to one of Claims 1 to 7, characterized in that the temperature of the water is kept below 25°C (degrees Celsius).

9. Device for carrying out the process according to one of Claims 1 to 8, characterized in that it

   - has a UV reduction reactor (10) and a chemical reduction reactor (12) which can be connected to this UV reduction reactor, the UV reduction reactor (10) comprising:
   - a UV light source (14), a guide apparatus (18, 20; 18; 98; 102) for the water to be irradiated, which guide apparatus at least partially surrounds the UV lamp (14) and is transparent to or reflects UV light, with the guide apparatus producing a thin water film,
   - a pump (38) for conveying the water to be treated through the guide apparatus, and, preferably, a mirror (22) surrounding the guide apparatus, where
   - the UV reduction reactor (10) can be connected via a switching valve (44) to at least one reaction vessel (46, 48) of the chemical reduction reactor (12) which operates in conjunction with a feed apparatus (52, 54) for the reducing agent and/or a feed apparatus (58, 60) for alkali metal hydroxide solution,
   - where a program controller (68) for the switching valve (44), which program controller operates in a time-dependent manner and/or in dependence on the pH of the water circulated in the UV reduction reactor (10).

10. Device according to Claim 9, characterized in that the guide apparatus has two guide walls (18, 20) which are transparent to UV light and are arranged at a small separation.

11. Device according to Claim 10, characterized in that the guide apparatus has two cylindrical guide tubes (18, 20) which are arranged at a small radial separation coaxially to the UV light source (14).

12. Device according to Claim 11, characterized in that the UV light source (14) is rod-shaped and is arranged on the axis of the guide tubes (18, 20).

13. Device according to Claim 11 or 12, characterized in that the mirror is a reflective layer applied to the outside of the outer guide tube (20).

14. Device according to Claim 9, characterized in that the guide apparatus has a spray nozzle ring (90) coaxial to the axis of the UV light source (14).

15. Device according to Claim 9, characterized in that the guide apparatus has a droplet nozzle ring (100) coaxial to the axis of the UV light source (14), which droplet nozzle ring produces a cylindrical water curtain essentially coaxial to the axis of the UV light source (14).

16. Device according to Claim 9, characterized in that the guide apparatus has a distributor bowl (96) coaxial to the UV light source (14), over the rim of which distributor bowl the water fed to the bowl interior flows off uniformly distributed in a peripheral direction, so that a cylindrical water curtain essentially coaxial to the axis of the UV light source is obtained.

17. Device according to Claim 15 or 16, characterized by a cylindrical guide body (18; 98) for the water curtain, which guide body is coaxial to the axis of the UV light source (14) and is transparent to or reflects UV light.

18. Device according to Claim 17, characterized in that the guide body is a plastic wire screen (98).

19. Device according to Claim 17, characterized in that the guide body is formed by a material bed (102) which is transparent to UV light and is held between coaxial walls (18, 20).

20. Device according to one of Claims 9 to 19, characterized in that the mirror (22) is transparent to visible light and/or permeable to heat radiation.

**21.** Device according to one of Claims 9 to 20, characterized in that the chemical reduction reactor (12) has a discharge pump arrangement (72, 78) which can be connected via a servovalve arrangement (74, 80) to a freshwater delivery line (76) and/or to the UV reduction reactor (10).

**22.** Device according to Claim 21, characterized by a program controller (68) for the servovalve arrangement (74, 80), which operates in a time-dependent manner or in dependence on the pH of the water situated in the chemical reduction reactor (12).

**Revendications**

**1.** Procédé de réduction de la teneur en nitrates d'une eau, procédé caractérisé en ce que :

- le nitrate présent dans l'eau à purifier est réduit en nitrite dans une première étape opératoire, sous irradiation par de la lumière ultraviolette, d'une mince couche de l'eau à traiter, et
- le nitrite ainsi obtenu est réduit en azote, dans une seconde étape opératoire, avec utilisation d'un réducteur chimique dans le milieu aqueux,
- la longueur d'onde de la lumière ultraviolette utilisée dans la première étape opératoire correspond à un maximum d'absorption par des ions nitrates en milieu aqueux et en même temps un minimum d'absorption par l'eau,
- la longueur d'onde de la lumière ultraviolette se situe dans l'intervalle compris entre 200 et 240 nm (nanomètre), et
- la valeur de pH est maintenue dans la première étape opératoire entre 8 et 11, notamment à une valeur d'environ 9 à 10.

**2.** Procédé selon la revendication 1, caractérisé en ce que le réducteur comprend un composé de type amido, en particulier, l'acide amido sulfurique.

**3.** Procédé selon l'une des revendications 1 à 2, caractérisé en ce que dans la première étape de traitement, l'eau est acheminée dans un tube transparent à la lumière ultraviolette et la vitesse d'écoulement de l'eau dans ce tube est maintenue à une valeur à laquelle des turbulences se produisent au voisinage de la paroi du tube.

**4.** Procédé selon la revendication 3, caractérisé en ce que la vitesse d'écoulement de l'eau se situe à environ 0,5 m/s jusqu'à 2,5 m/s.

**5.** Procédé selon l'une des revendications 1 à 3, caractérisé en ce que, pendant la totalité de la durée de la première étape opératoire, la valeur du pH de l'eau est maintenue à plus de 6, avantageusement grâce à l'addition de NaOH.

**6.** Procédé selon l'une des revendications 1 à 5, caractérisé en ce que, au cours de la première étape opératoire, l'eau est acheminée plusieurs fois à travers une région traitée par de la lumière ultraviolette.

**7.** Procédé selon l'une des revendications 1 à 5, caractérisé en ce que les première et seconde étapes opératoires sont réalisées dans un procédé fonctionnant en continu .

**8.** Procédé selon l'une des revendications 1 à 7, caractérisé en ce que la température de l'eau est maintenue au-dessous de 25°C (degrés celsius).

**9.** Dispositif pour la mise en oeuvre du procédé selon l'une des revendications 1 à 8 , caractérisé

- en ce qu'il présente un réacteur (10) de réduction par l'ultraviolet et un réacteur (12) de réduction chimique qui peut y être relié, le réacteur (10) de réduction par l'ultraviolet comprenant :
- une source (14) de lumière ultraviolette, une installation d'acheminement (18,20; 18; 98 ; 102) de l'eau à irradier, cette installation entourant au moins partiellement la lampe à ultraviolet (14) et laissant passer la lumière ultraviolette ou pouvant réfléchir la lumière ultraviolette, l'installation d'acheminement de l'eau produisant un mince film d'eau,
- une pompe (38) pour faire circuler l'eau à traiter dans l'installation d'acheminement, et de préférence, un miroir (22) entourant l'installation d'acheminement,
- le réacteur (10) de réduction par l'ultraviolet pouvant être relié, par l'intermédiaire d'une soupape (44) d'inversion, à au moins un réservoir de réaction (46, 48) du réacteur (12) de réduction chimique, lequel coopère avec une installation (52, 54) d'introduction du réducteur et/ou avec une installation (58,60) d'addition d'une base,
- une commande de programmation (68) de la soupape d'inversion (44), cette commande travaillant en fonction du temps et/ou en fonction de la valeur du pH de l'eau brassée dans le réacteur (10) de réduction par l'ultraviolet.

10. Dispositif selon la revendication 9, caractérisé en ce que l'installation d'acheminement présente deux parois (18,20) perméables à la lumière ultraviolette et disposées à une faible distance l'une de l'autre.

11. Dispositif selon la revendication 10, caractérisé en ce que l'installation d'acheminement présente deux tubes cylindriques (18,20) disposés coaxialement à une faible distance radiale de la source de lumière ultraviolette (14).

12. Dispositif selon la revendication 11, caractérisé en ce que la source de lumière ultraviolette (14) est en forme de tige et est disposée sur l'axe des tubes d'acheminement (18,20).

13. Disposition selon la revendication 11 ou 12, caractérisé en ce que le miroir réfléchissant est appliqué sur le côté extérieur du tube conducteur extérieur (20).

14. Dispositif selon la revendication 9, caractérisé en ce que l'installation d'acheminement présente une couronne (90) de buses coaxiales avec l'axe de la source (14) de lumière ultraviolette.

15. Dispositif selon la revendication 9, caractérisé en ce que l'installation d'acheminement présente un anneau (100) de buses à gouttes, anneau coaxial à l'axe de la source (14) de lumière ultraviolette, qui produit un rideau d'eau cylindrique essentiellement coaxial à l'axe de la source (14) d'une lumière ultraviolette.

16. dispositif selon la revendication 9, caractérisé en ce que l'installation d'acheminement présente une coupelle répartitrice (96) coaxiale à la source (14) de lumière ultraviolette, sur le bord de laquelle l'eau acheminée vers l'intérieur de la coupelle est répartie uniformément dans le sens périphérique de façon à obtenir un rideau d'eau cylindrique essentiellement coaxial à l'axe de la source de lumière ultraviolette.

17. Dispositif selon la revendication 15 ou 16, caractérisé en ce qu'il comporte un corps cylindrique, coaxial à l'axe de la source (14) de lumière ultraviolette, ce corps (18,98) étant destiné à acheminer le rideau d'eau et étant transparent à la lumière ultraviolette ou pouvant réfléchir la lumière ultraviolette.

18. Dispositif selon la revendication 17, caractérisé en ce que le corps d'acheminement ou conducteur est une toile en matière plastique (98).

19. Dispositif selon la revendication 17, caractérisé en ce que le corps d'acheminement ou conducteur est formé par une matière empilée (102) maintenue entre des parois coaxiales (18,20) et transparente à la lumière ultraviolette.

20. Dispositif selon l'une des revendications 9 à 19, caractérisé en ce que le miroir (22) est transparent pour la lumière visible et/ou pour un rayonnement thermique.

21. Dispositif selon l'une des revendications 9 à 20, caractérisé en ce que le réacteur (12) de réduction chimique présente un agencement de pompes (72,78) d'extraction, pouvant être relié par l'intermédiaire d'un agencement (74, 80) de servo soupapes à un conduit (76) de fourniture d'eau fraîche et/ou pouvant être relié au réacteur (10) de réduction par l'ultraviolet.

22. Dispositif selon la revendication 21, caractérisé par une commande programmée (68) de l'agencement de servo soupapes (74, 80), agencement qui travaille en fonction du temps ou en fonction de la valeur du pH de l'eau se trouvant dans le réacteur (12) de réduction chimique.

Fig.1

*Fig.2*

*Fig.3*

Fig. 4

Fig. 5